# EUROPEAN PATENT SPECIFICATION

(11) **EP 0 955 710 B1**
(45) Date of publication and mention of the grant of the patent: **27.09.2006**
(21) Application number: 99201386.2
(22) Date of filing: 04.05.1999
(51) Int. Cl.: H02B 1/04

(54) **System for supporting an apparatus on an electrical switchboard**
EINRICHTUNG ZUR HALTERUNG EINES GERÄTES AUF EIN ELEKTRISCHES SCHALTFELD
Système de montage d'un appareil sur un tableau de commutation

(30) Priority: 07.05.1998 IT MI980998
(43) Date of publication of application: 10.11.1999
(73) Proprietor: BTICINO S.P.A., 20154 Milano (IT)
(72) Inventor: Fabrizi, Fabrizio, 24100 Bergamo (IT); Passera, Costantino, 20094 Corsico - Milano (IT)
(74) Representative: Siniscalco, Fabio

(56) References cited:
- EP-A- 0 293 325
- EP-A- 0 798 834
- DE-U- 9 000 781
- US-A- 5 667 059

## Description

The present invention relates to electrical apparatuses, and more specifically to a system for supporting an apparatus on an electrical switchboard as defined in the preamble of Claim 1.

An apparatus, for example a circuit breaker, that is to be mounted in an electrical switchboard is usually fixed to a mounting plate. At present, mounting plates are fixed to the frame with screws or suchlike fixing means. This requires operations that are rather laborious and time-consuming, engaging both hands of the operator if screws and bolts are being used or requiring an expensive construction of the frame if using studs, and of course also requires the availability of screws, bolts or other small items that can easily be lost, and corresponding tools.

DE-U-9000781 discloses a system for supporting an apparatus on an electrical switchboard comprising features as set out in the preamble of claim 1.

The invention solves the problem of how to simplify the assembly operations and eliminate the use of tools to bring about the fixing by means of a supporting system as defined in Claim 1. Advantageous embodiments are defined in the subordinate claims.

The invention offers the clear advantage that it is possible detachably to fix an apparatus mounted on a mounting plate to a frame with a simple movement of the hand in which the mounting plate is brought into engagement with the frame in a locked positional relationship, without the use of small parts or tools.

The invention will now be described with reference to a circuit breaker, which is shown in the attached drawings together with the mounting plate to which it is fitted and with the frame on which it is mounted, but the circuit breaker must be understood as purely an example of any apparatus which it is wished to install on a frame in a switchboard, without any restriction being implied as the scope of the invention is defined purely by the claims. In the drawings
- Figure 1 is an axonometric view of a circuit breaker mounted on a mounting plate and of a corresponding frame, these items being ready for assembly by a supporting system according to the invention, in which the front sides of the mounting plate and frame are visible,
- Figure 2 is an axonometric view of a circuit breaker mounted on a mounting plate and of a corresponding frame, these items being ready for assembly by a supporting system according to the invention, in which the rear sides of the mounting plate and frame are visible,
- Figure 3 is an axonometric view of a circuit breaker mounted via a mounting plate on a corresponding frame by a supporting system according to the invention, in which the front sides of the mounting plate and frame are visible, and
- Figure 4 is an axonometric view of a circuit breaker mounted via a mounting plate on a corresponding frame by a supporting system according to the invention, in which the rear sides of the mounting plate and frame are visible.

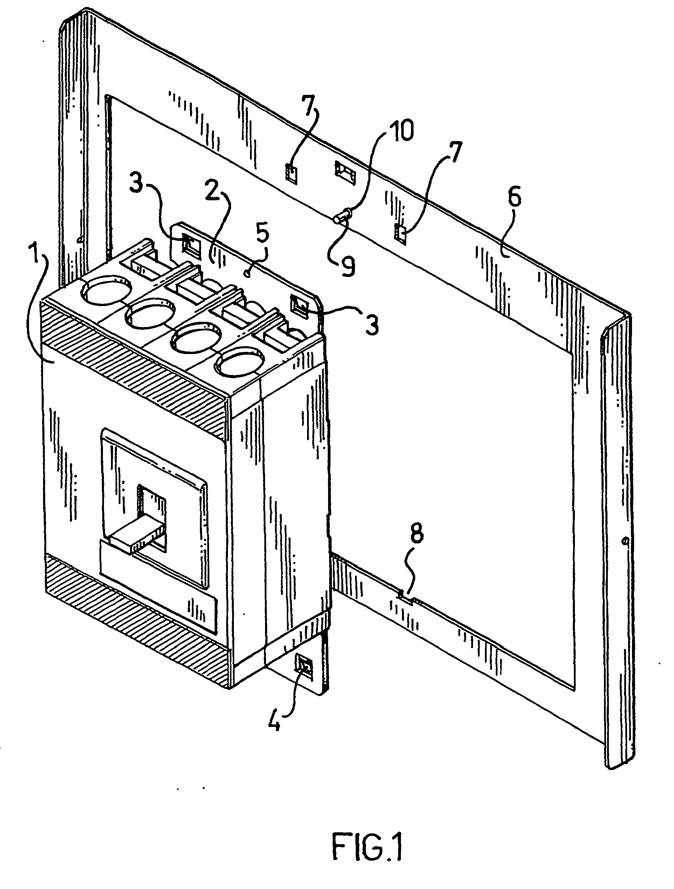

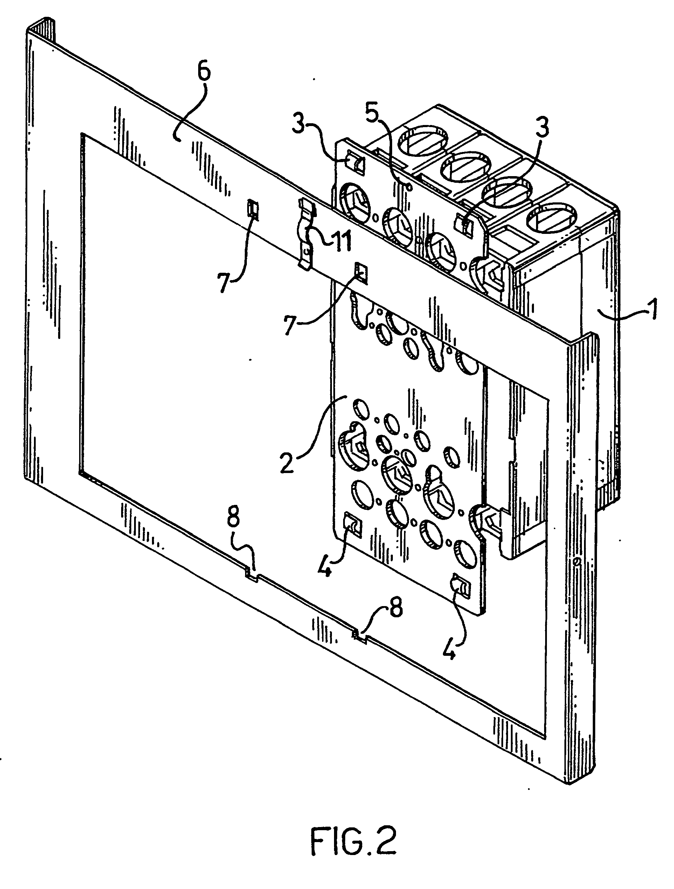

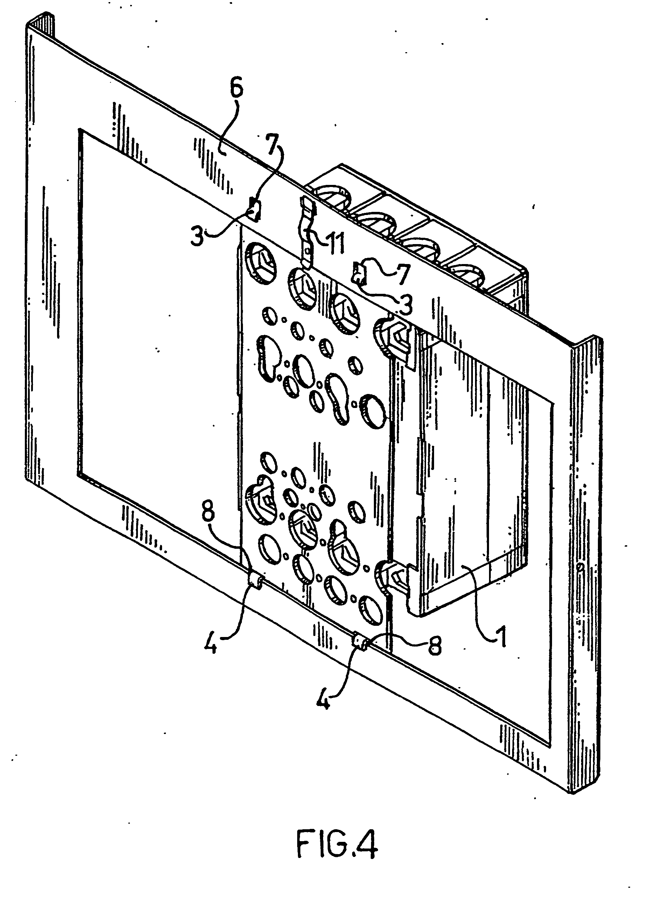

Figures 1 and 2 show a circuit breaker 1 fixed by conventional means (not shown) to a mounting plate 2 which may be made of, for example, sheet metal or moulded plastic. In order to fix the mounting plate detachably to a frame 6, made of for example sheet metal, and forming part of the electrical switchboard in which the circuit breaker 1 is to be mounted, the mounting plate 2 comprises two upper hooks 3 and two lower hooks 4, visible more clearly in Figures 2 and 4, and the frame 6 has two upper openings 7 and two lower notches 8. The hooks 3 and 4 constitute first means of hooking the mounting plate 2 to the frame 6 and the openings 7 together with the notches 8 constitute second hook means which pair with the first hook means.

The mounting plate 2 is mounted on the frame 6 by inserting the hooks 3 and 4 into the openings 7 and notches 8, respectively. The mounting plate also contains a hole 5 that serves as a first locking component of the fixing means, while the frame comprises, as a second locking component that pairs with the first, a pin 9 passing through a hole 10. The function of these components will be explained later.

Visible in Figures 2 and 4 are the same components 1 to 9 as described above, plus a spring plate 11 fixed at one end to the frame 6. The pin 9 is fixed to the other end of the spring 11 and is pushed by the latter through the hole 10 (not visible because covered by the spring 11) so as to project on the inside of the frame, i.e. on the opposite side to that on which the spring is fixed. In the illustrative embodiment shown in the drawings the hooks 3 and 4 are stamped out with the mounting plate 2, but the object would work in exactly the same way if they were separate parts attached by welding or other means.

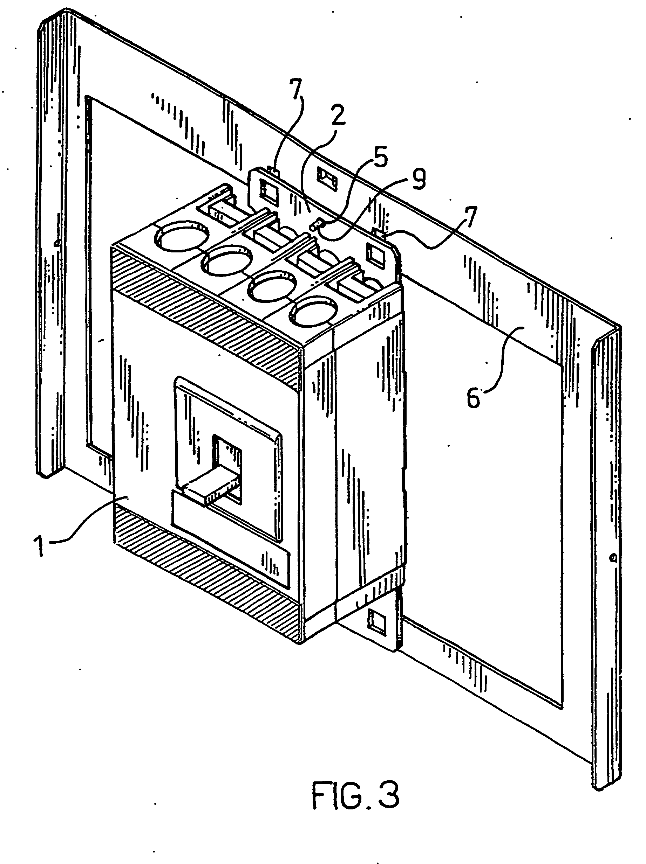

Components 5, 9 and 10 together form an elastic snap-action device for locking the means of fixing the mounting plate 2 to the frame 6. Their function will now be explained in detail with reference to Figures 3 and 4.

The holes 5 and 10 are identical and positioned so as to be exactly in line with each other when the circuit breaker 1 is in the mounted state on the frame 6, i.e. in the position in which the hooks 3 are hooked into their respective openings 7 and the hooks 4 are hooked over their respective notches 8. In this state, the pin 9 passes through the holes 5 and 10 allowing the mounting plate 2 to move only perpendicularly to the frame 6, but this movement is prevented by the hooks 3 and 4 which are engaged in the openings 7 and in the notches 8. This securing of the hooks to the frame in turn allows the mounting plate to move only parallel to the frame, but this movement is prevented by the pin 9 keeping the holes 5 and 10 coaxial with each other. Because of the spring 11, the pin will remain in the locked position even if the switchboard is moved about.

For assembly purposes the circuit breaker 1 is brought up to the frame 6 in such a way that the mounting plate 2 is in a coupled position in which the upper hooks 3 are exactly aligned with their respective openings 7 and can be pushed into them. In this position the pin 9 is pushed back by the mounting plate 2, against the action of the spring 11, until its free end is flush with the inside face of the frame. Once the hooks 3 are fully into the openings 7 and the mounting plate lowered into the hooked position, the holes 5 and 10 will be in alignment and the pin 9, being fixed only to the spring 11, will be pushed into the locking position in which it passes through both holes 5 and 10.

In order to remove the circuit breaker 1 from the switchboard, e.g. to replace it, all that is required is to push the pin 9 back against the action of the spring 11, lift the mounting plate to the position referred to as the coupled position, in which the free end of the pin interferes with the surface of mounting plate, and withdraw the hooks 3 from the openings 7.

The end of the pin 9 may optionally taper or be rounded to facilitate its insertion into the hole 5.

It will be obvious that many modifications can be made to the embodiment set forth, for instance as regards the number and position of the openings 7 and of the notches 8 or as regards the number, form and position of components 5, 9 and 10. Instead of the notches 8 there could be openings like the openings 7, or, instead of the openings 7, there could be notches. Moreover, the openings or notches could be on the mounting plate 2 rather than on the frame 6 and the hooks could be on the frame rather than on the mounting plate. The spring 11 could be fixed to the mounting plate 2 and the pin 9 could pass first of all through the hole 5 and then through the hole 10. Also, the spring could be helical and coaxial with the pin 9 rather than being a plate.

## Claims

1. System for supporting an apparatus on an electrical switchboard comprising:
- a frame (6) fixed to the switchboard,
- a mounting plate (2) fixed to the apparatus,
- means for fixing the mounting plate detachably to the frame, wherein the fixing means comprise at least one first hook component (3, 4) on the mounting plate (2) and at least one second hook component (7, 8) on the frame (6) that can be engaged together so as to move from a coupled position to a hooked position, said fixing means further comprising elastic snap-action locking means comprising at least one first locking component (5) on the mounting plate (2) and at least one second locking component (9, 10) on the frame (6), these first and second locking components being in a state of disengagement when the hook components are in the coupled position and snapping into engagement when the hook components are in the hooked position,
**characterized in that**
one of said first and second locking components (5, 9, 10) comprises a hole and a securing member (9) urged by spring means (11) and retractable through said hole and the other one of the said first and second locking components comprises a housing (5) for said securing member (9).

2. Supporting system according to Claim 1, in which the housing (5, 10) comprises a first hole and the securing member (9) comprises a pin and a second hole, which pin, when the hook components are in the hooked position, is inserted into both the said holes.

3. Supporting system according to one of the preceding claims, in which the said elastic snap-action locking means comprise a spring plate (11) that keeps the first and second locking components (5, 9, 10) in mutual engagement when the hook components are in the hooked position.

4. Supporting system according to one of the preceding Claims 1 to 3, in which the locking component that includes the securing member (9) is the second locking component (9, 10) on the frame (6).

5. Supporting system according to Claim 4 in so far as it depends on Claim 3, in which the securing member (9) is connected to the frame (6) via the spring plate (11).

6. supporting system according to any one of the preceding claims, in which the said first hook component comprises a hook (3, 4) and the said second hook component comprises an opening (7, 8) and in that the hook (3, 4) enters the opening (7, 8) in the coupled position and engages with the frame (6) in the hooked position.

7. Supporting system according to Claim 6, in which the hook (3, 4) is stamped out with the mounting plate (2).

8. Supporting system according to any one of the preceding claims, in which the abovementioned apparatus (1) is a circuit breaker.

9. Electrical switchboard that includes the supporting system according to any one of the preceding claims.

## Patentansprüche

1. System zum Halten einer Vorrichtung an einer elektrischen Schalttafel, das folgende Merkmale aufweist:
- einen Rahmen (6), der an der Schalttafel festgemacht ist,
- eine Befestigungsplatte (2), die an der Vorrichtung festgemacht ist,
- eine Einrichtung zum abnehmbaren Festmachen der Befestigungsplatte an dem Rahmen, wobei die Festmacheinrichtung zumindest eine erste Hakenkomponente (3, 4) an der Befestigungsplatte (2) und zumindest eine zweite Hakenkomponente (7, 8) an dem Rahmen (6) aufweist, die miteinander in Eingriff gebracht werden können, um sich von einer gekoppelten Position zu einer verhakten Position zu bewegen, wobei die Festmacheinrichtung ferner eine elastische Einschnappaktionsverriegelungseinrichtung aufweist, die zumindest eine erste Verriegelungskomponente (5) an der Befestigungsplatte (2) und zumindest eine zweite Verriegelungskomponente (9, 10) an dem Rahmen (6) aufweist, wobei diese erste und zweite Verriegelungskomponente in einem Zustand der Außereingriffnahme sind, wenn sich die Hakenkomponenten in der gekoppelten Position befinden, und in Ineingriffnahme einschnappen, wenn sich die Hakenkomponenten in der verhakten Position befinden,
**dadurch gekennzeichnet, dass** eine der ersten und der zweiten Verriegelungskomponente (5, 9, 10) ein Loch und ein Sicherungsbauglied (9) aufweist, das durch eine Federeinrichtung (11) getrieben wird und durch das Loch zurückziehbar ist, und die andere der ersten und der zweiten Verriegelungskomponente ein Gehäuse (5) für das Sicherungsbauglied (9) aufweist.

2. Haltesystem gemäß Anspruch 1, bei dem das Gehäuse (5, 10) ein erstes Loch aufweist, und das Sicherungsbauglied (9) einen Stift und ein zweites Loch aufweist, wobei dieser Stift, wenn sich die Hakenkomponenten in der verhakten Position befinden, in beide Löcher eingeführt ist.

3. Haltesystem gemäß einem der vorhergehenden Ansprüche, bei dem die elastische Einschnappaktionsverriegelungseinrichtung eine Federplatte (11) aufweist, die die erste und die zweite Verriegelungskomponente (5, 9, 10) in gegenseitiger Ineingriffnahme hält, wenn sich die Hakenkomponenten in der verhakten Position befinden.

4. Haltesystem gemäß einem der Ansprüche 1 bis 3, bei dem die Verriegelungskomponente, die das Sicherungsbauglied (9) umfasst, die zweite Verriegelungskomponente (9, 10) an dem Rahmen (6) ist.

5. Haltesystem gemäß Anspruch 4 in Rückbeziehung auf Anspruch 3, bei dem das Sicherungsbauglied (9) mit dem Rahmen (6) über die Federplatte (11) verbunden ist.

6. Haltesystem gemäß einem der vorhergehenden Ansprüche, bei dem die erste Hakenkomponente einen Haken (3, 4) aufweist, und die zweite Hakenkomponente eine Öffnung (7, 8) aufweist, und wobei der Haken (3, 4) in der gekoppelten Position in die Öffnung (7, 8) eintritt und in der verhakten Position den Rahmen (6) in Eingriff nimmt.

7. Haltesystem gemäß Anspruch 6, bei dem der Haken (3, 4) mit der Befestigungsplatte (2) ausgestanzt wird.

8. Haltesystem gemäß einem der vorhergehenden Ansprüche, bei dem die im Vorhergehenden erwähnte Vorrichtung (1) ein Schaltungsunterbrecher ist.

9. Elektrische Schalttafel, die das Haltesystem gemäß einem der vorhergehenden Ansprüche umfasst.

## Revendications

1. Système pour supporter un appareil sur un tableau de commutation électrique comportant :
- un cadre (6) fixé au tableau de commutation,
- une plaque de montage (2) fixée à l'appareil,
- des moyens pour fixer de façon amovible la plaque de montage au cadre, dans lequel les moyens de fixation comprennent au moins une première pièce à crochet (3, 4) sur la plaque de montage (2) et au moins une seconde pièce à crochet (7, 8) sur le cadre (6) qui peuvent être engagées l'une avec l'autre afin de passer d'une position accouplée à une position accrochée, lesdits moyens de fixation comprenant en outre des moyens élastiques de verrouillage à action d'encliquetage comportant au moins une première pièce de verrouillage (5) sur la plaque de montage (2) et au moins une seconde pièce de verrouillage (9, 10) sur le cadre (6), ces première et seconde pièces de verrouillage étant dans un état de dégagement lorsque les pièces à crochets sont dans la position accouplée et s'encliquetant en engagement lorsque les pièces à crochets sont dans la position accrochée,
**caractérisé en ce que**
l'une desdites première et seconde pièces de verrouillage (5, 9, 10) comprend un trou et un élément d'assujettissement (9) sollicité par un moyen à ressort (11) et pouvant être rétracté à travers ledit trou, et l'autre desdites première et seconde pièces de verrouillage comprend un logement (5) pour ledit élément d'assujettissement (9).

2. Système de support selon la revendication 1, dans lequel le logement (5, 10) présente un premier trou, et l'élément d'assujettissement (9) comporte une broche et un second trou, laquelle broche, lorsque les pièces à crochets sont dans la position accrochée, est insérée dans lesdits deux trous.

3. Système de support selon l'une des revendications précédentes, dans lequel ledit moyen élastique de verrouillage à action d'encliquetage comporte un ressort plat (11) qui maintient les première et seconde pièces de verrouillage (5, 9, 10) en engagement mutuel lorsque les pièces à crochets sont dans la position accrochée.

4. Système de support selon l'une des revendications précédentes 1 à 3, dans lequel la pièce de verrouillage qui comprend l'élément d'assujettissement (9) est la seconde pièce de verrouillage (9, 10) sur le cadre (6).

5. Système de support selon la revendication 4 dans la mesure où elle dépend de la revendication 3, dans lequel l'élément d'assujettissement (9) est relié au cadre (6) par l'intermédiaire du ressort plat (11).

6. Système de support selon l'une quelconque des revendications précédentes, dans lequel ladite première pièce à crochet comporte un crochet (3, 4) et ladite seconde pièce à crochet présente une ouverture (7, 8), et en ce que le crochet (3, 4) entre dans l'ouverture (7, 8) dans la position accouplée et réalise un engagement avec le cadre (6) dans la position accrochée.

7. Système de support selon la revendication 6, dans lequel le crochet (3, 4) est découpé dans la plaque de montage (2).

8. Système de support selon l'une quelconque des revendications précédentes, dans lequel l'appareil précité (1) est un disjoncteur.

9. Tableau de commutation électrique qui comprend le système de support selon l'une quelconque des revendications précédentes.
